# EUROPÄISCHE PATENTSCHRIFT

(11) **EP 3 306 246 B1**
(45) Veröffentlichungstag und Bekanntmachung des Hinweises auf die Patenterteilung: **30.09.2020**
(21) Anmeldenummer: 16192593.8
(22) Anmeldetag: 06.10.2016
(51) Int. Cl.: F28C 1/14, F28D 5/02, F28F 19/01

(54) **WÄRMEAUSTAUSCHVORRICHTUNG**
HEAT EXCHANGE DEVICE
DISPOSITIF D'ÉCHANGE THERMIQUE

(43) Veröffentlichungstag der Anmeldung: 11.04.2018
(73) Patentinhaber: Jaeggi HybridTechnologie AG, 4051 Basel (CH)
(72) Erfinder: Schirmer, Jens, 4058 Basel (CH); Hörler, Samuel, 5102 Rupperswil (CH)
(74) Vertreter: Intellectual Property Services GmbH

(56) Entgegenhaltungen:
- EP-A2- 2 061 581
- WO-A1-2004/072569
- WO-A1-2015/173767
- DE-B- 1 240 896
- GB-A- 1 354 607
- US-A- 968 332
- US-A- 4 443 389

## Beschreibung

Die Erfindung betrifft eine Wärmeaustauschvorrichtung gemäss dem Oberbegriff des unabhängigen Anspruchs 1.

Aus dem Stand der Technik sind Wärmeaustauschvorrichtungen mit einem Wärmeaustauschmodul bekannt, wobei insbesondere mittels dem Wärmeaustauschmodul ein Wärmeaustausch zwischen einem Transportfluid, z.B. Wasser, Öl oder häufig einfach die Umgebungsluft, und einem Kältemittel, das beispielsweise flüssig oder gasförmig ist, stattfindet. Das Wärmeaustauschmodul ist dabei vom Transportfluid umströmbar und das Kältemittel strömt getrennt vom Transportfluid im Wärmeaustauschmodul bzw. ist das Kältemittel im Wärmeaustauschmodul führbar. Im Betriebszustand wird hierbei über Konvektion entweder Wärmeenergie von der Wärmeaustauschvorrichtung, insbesondere dem Kältemittel im Wärmeaustauschmodul, an das Transportfluid übertragen oder umgekehrt es wird Wärmeenergie vom Transportfluid auf die Wärmeaustauschvorrichtungen übertragen. Das Transportfluid und/oder das Kältemittel werden dabei also entweder erwärmt oder abgekühlt.

Die mit der Wärmeaustauschvorrichtung abführbare Wärmeenergie kann, beispielsweise um Energie zu sparen und einen verbesserten Betrieb zu ermöglichen, nochmals gesteigert werden, indem eine Benetzungseinrichtung an der Wärmeaustauschvorrichtung vorgesehen ist, die das Wärmeaustauschmodul zusätzlich mit einer aus der Benetzungseinrichtung ausbringbaren Flüssigkeit, beispielsweise Wasser, benetzt, sodass zusätzliche Wärmeenergie aufgrund der Verdunstung der Flüssigkeit von der Wärmeaustauschvorrichtung abführbar ist. Die aus der Benetzungseinrichtung ausströmbare Flüssigkeit kann beispielsweise mittels Sprühen, insbesondere mittels selektivem Sprühen, auf das Wärmeaustauschmodul aufgegeben werden. Somit ist ein hybrider Betrieb der Wärmeaustauschvorrichtung möglich, d.h. die Wärmeaustauschvorrichtung kann entweder in einem sogenannten Trockenbetriebsmodus betrieben werden, also ohne Benetzung des Wärmeaustauschmoduls, oder in einem Hybridmodus, beispielsweise bei hohen thermischen Lasten und/oder Aussentemperaturen, mit Benetzung des Wärmeaustauschmoduls.

In der WO 90/15299 wird eine solche Wärmeaustauschvorrichtung mit einer Benetzungseinrichtung und einer Auffangeinrichtung beschrieben. Dabei wird das Wärmeaustauschmodul mit einer Flüssigkeit benetzt. Ein Flüssigkeitsüberschuss, also der Teil der aus der Benetzungseinrichtung ausgebrachten Flüssigkeit, der nicht verdunstet, wird hierbei mit einem Abtropfelement der Auffangeinrichtung zugeführt und wieder der Benetzungseinrichtung zugeführt.

In der EP 0 943 882 B1 wird ein Trockenkühlturm für eine hybride Verflüssigung eines Kältemittels mit einer Benetzungseinrichtung beschrieben. Der in der EP 0 943 882 B1 beschriebene Trockenkühlturm sieht vor, dass das Wärmeaustauschmodul in einen Enthitzer und einen dem Enthitzer nachgeschalteten Verflüssiger aufgeteilt ist. Im Bereich des freibleibenden Teils der oberen Stirnseite des Verflüssigers ist eine Benetzungseinrichtung angeordnet, mit welcher der Verflüssiger mit der Flüssigkeit benetzt wird. Die Flüssigkeit, insbesondere der Flüssigkeitsüberschuss, wird aufgefangen und aufbereitet und wieder der Benetzungseinrichtung zugeführt. Die WO 2015/173767 A1 zeigt eine Wärmeaustauschvorrichtung gemäß dem Oberbegriff des Anspruchs 1.

Nachteil der bekannten Wärmeaustauschvorrichtungen, insbesondere der in der WO 90/15299 und der EP 0 943 882 B1 beschriebenen Wärmeaustauschvorrichtung ist, dass einer oder mehrere Partikel, beispielsweise Staub, Schmutz und Fasern, die sich in der Umgebungsluft und/oder auf der Wärmeaustauschvorrichtung, insbesondere dem Wärmeaustauschmodul befinden, von der Flüssigkeit ausgeschlämmt bzw. ausgewaschen und/oder an das Abtropfelement und/oder die Auffangeinrichtung von der Flüssigkeit mitgeführt werden. Der oder die Partikel können sich dann beispielsweise in der Auffangeinrichtung absetzen und beispielsweise einen Abfluss der Auffangeinrichtung verstopfen oder in der in der Auffangeinrichtung gesammelten Flüssigkeit schwimmen. Wird die Flüssigkeit zirkuliert, also der Benetzungseinrichtung wieder zugeführt, kann die in der Auffangeinrichtung gesammelte Flüssigkeit mit dem mitgeführten Partikel von einer Benetzungspumpe angesaugt und wieder zur Benetzungseinrichtung gepumpt werden, sodass sich der Partikel, insbesondere als faseriger Schmutz, im Leitungssystem der Benetzungseinrichtung und/oder der Benetzungspumpe und/oder auf dem Wärmeaustauschmodul absetzt und die Benetzung des Wärmeaustauschmoduls mit der Flüssigkeit stört oder gar unmöglich macht, da der Partikel beispielsweise die Benetzungseinrichtung verstopft und/oder sich derart an das Wärmeaustauschmodul anlagern, dass das Wärmeaustauschmodul nur noch schlecht nicht oder überhaupt nicht mehr vom Transportfluid umströmbar ist. Als Folge hiervon kann beispielsweise die Wärmeaustauschvorrichtung nicht mehr ein Sollwert an Wärmeenergie ab- oder zugeführt werden, die Partikel reduzieren also die Effizienz der Wärmeaustauschvorrichtung, oder der Betrieb der Wärmeaustauschvorrichtung muss unterbrochen werden, um diese zu warten, insbesondere zu reinigen. Der oder die Partikel, insbesondere faseriger Schmutz, beeinträchtigen also sowohl den Betrieb, als auch die Effizienz der Übertragung der Wärmeenergie der Wärmeaustauschvorrichtung wesentlich und verursachen darüber hinaus einen erheblichen Wartungs- und Reinigungsaufwand.

Ausgehend von diesem Stand der Technik ist es daher eine Aufgabe der vorliegenden Erfindung eine Wärmeaustauschvorrichtung mit Merkmalen bereitzustellen, die einen störungsfreien und/oder energieeffizienten Betrieb der Wärmeaustauschvorrichtung ermöglichen.

Diese Aufgabe wird durch eine Wärmeaustauschvorrichtung mit den Merkmalen des Anspruchs 1 gelöst.

Die abhängigen Ansprüche beziehen sich auf besonders vorteilhafte Ausführungsformen der Erfindung.

Erfindungsgemäss wird eine Wärmeaustauschvorrichtung vorgeschlagen, umfassend ein erstes Wärmeaustauschmodul für den Wärmeaustausch zwischen einem Transportfluid und einem Kältemittel, wobei das erste Wärmeaustauschmodul vom Transportfluid umströmbar ist und das Kältemittel getrennt vom Transportfluid im ersten Wärmeaustauschmodul führbar ist und eine Benetzungseinrichtung, die derart vorgesehen und angeordnet ist, dass das erste Wärmeaustauschmodul mit einer aus der Benetzungseinrichtung ausbringbaren Flüssigkeit benetzbar ist. Die Wärmeaustauschvorrichtung umfasst weiter eine erste Filtermatte, die derart ausgestaltet und an der Wärmeaustauschvorrichtung angeordnet ist, dass die aus der Benetzungseinrichtung ausströmende Flüssigkeit mit der ersten Filtermatte sammelbar ist und/oder ein von der Flüssigkeit mitgeführter Partikel an der ersten Filtermatte abscheidbar ist.

Die Vorteile der erfindungsgemässen Wärmeaustauschvorrichtung sind, dass im Betriebszustand der Wärmeaustauschvorrichtung einer oder mehrere Partikel, beispielsweise Staub, Schmutz, Laub, Flusen oder Fasern, die sich in der Umgebungsluft und/oder auf der Wärmeaustauschvorrichtung, insbesondere auf dem Wärmeaustauschmodul befinden, von der von der Benetzungseinrichtung ausgebrachten Flüssigkeit ausgeschlämmt und/oder ausgewaschen und/oder von der Flüssigkeit mitgeführt werden und an der ersten Filtermatte abscheidbar sind, die Flüssigkeit mit der ersten Filtermatte also filterbar ist. Somit verhindert die erste Filtermatte, dass der oder die Partikel sich an der Wärmeaustauschvorrichtung, insbesondere das Wärmeaustauschmodul und/oder die Benetzungseinrichtung und/oder die Auffangeinrichtung, an- und/oder ablagern und/oder diese verschmutzen. Ausserdem verhindert das Abscheiden eines oder mehrerer von der Flüssigkeit mitgeführten Partikel an der ersten Filtermatte, dass der Betrieb der Wärmeaustauschvorrichtung immer wieder unterbrochen werden muss, um die Wärmeaustauschvorrichtung von den Partikeln zu reinigen und/oder die Wärmeaustauschvorrichtung zu warten. Darüber hinaus wird verhindert, dass Abfuhr an Wärmeenergie aufgrund von an der Wärmeaustauschvorrichtung angelagerten Partikeln reduziert wird. Die erste Filtermatte zeigt darüber hinaus eine Menge von an der ersten Filtermatte abgeschiedenen Schmutz bzw. Partikel an, sodass die erste Filtermatte vorteilhafterweise auch als eine Verschmutzungsanzeige ausgebildet ist. Ein weiterer wesentlicher Vorteil ist auch, dass die Flüssigkeit, insbesondere der Flüssigkeitsüberschuss, mit der ersten Filtermatte sammelbar ist und dabei von einer Tropfenform in eine breite flächige Verteilung überführbar ist.

Das erste Wärmeaustauschmodul ist ein lamellierter Wärmetauscher, der beispielsweise mehrere Rohre zur Durchleitung des Kältemittels und eine Vielzahl von Lamellen umfassen kann.

Die Lamellen können dabei mit den Rohren verbunden sein und werden im Betrieb vom dem Transportfluid umströmt, wobei dem Transportfluid und/oder dem Kältemittel Wärmeenergie mittels Konvektion zu- und/oder abführbar ist. Die Lamellen oder Rohre können aus einem gut wärmeleitfähigen Material sein, beispielsweise Aluminium oder Kupfer, bevorzugt Edelstahl oder beschichtetes Aluminium. Selbstverständlich kann der lamellierte Wärmeaustauscher auch mehrere Rohre für mehr als ein Wärmeübertragungsmedium enthalten und/oder die Rohre können je nach Bedarf parallel und/oder in Serie miteinander verbunden sein. Der lamellierte Wärmeaustauscher ist besonders zweckmässig, wenn das Transportfluid gasförmig ist und aus Umgebungsluft besteht, da diese einen vergleichsweise niedrigen Wärmeübertragungskoeffizienten hat, der durch eine entsprechend grosse Oberfläche der Lamellen ausgeglichen werden kann. Selbstverständlich können auch mehr als ein erstes Wärmeaustauschmodul, also ein zweites Wärmeaustauschmodul oder mehrere Wärmeaustauschmodule, insbesondere 2 bis 10 oder mehr Wärmeaustauschmodule, vorgesehen sein. Erfindungsgemäß ist zumindest ein zweites Wärmeaustauschmodul vorgesehen.

Das erste Wärmeaustauschmodul kann eine äussere Begrenzung aufweisen, die durch eine Einströmfläche und eine Ausströmfläche ausgebildet sein kann, sodass das Transportfluid über die Einströmfläche dem ersten Wärmeaustauschmodul zuführbar, mit dem ersten Wärmeaustauschmodul in strömenden Kontakt bringbar und über die Ausströmfläche aus dem ersten Wärmeaustauschmodul wieder abführbar ist. Die Wärmeaustauschvorrichtung kann einen Ventilator umfassen, der derart ausgestaltet und angeordnet ist, dass das Transportfluid über die Einströmfläche des ersten Wärmeaustauschmoduls ansaugbar, mit dem Wärmeaustauschmodul in strömenden Kontakt bringbar und über die Ausströmfläche aus dem Wärmeaustauschmodul wieder abführbar ist.

Die Benetzungseinrichtung kann eine oder mehrere Leitungen aufweisen, sodass die Flüssigkeit führbar ist, und Ventile umfassen, sodass eine aus der Benetzungseinrichtung ausströmbare Flüssigkeitsmenge steuerbar und/oder regelbar ist. Die Benetzungseinrichtung kann ausserdem eines oder mehrere Benetzungselemente, bevorzugt eine Düse, eine Hohlkegeldüse, eine Flachstrahldüse oder jede andere Art von Düse die zur Benetzung des Wärmeaustauschers geeignet sein kann, umfassen, sodass das erste Wärmeaustauschmodul und/oder zweite Wärmeaustauschmodul oder auch weitere Wärmeaustauschmodule mit dem Benetzungselement benetzbar sind. Hierbei können eines oder mehrere Benetzungselemente für jeweils ein Wärmeaustauschmodul und/oder für jeweils zwei Wärmeaustauschmodule oder sogar für mehrere Wärmeaustauschmodule vorgesehen und entsprechend angeordnet sein. Die Benetzungseinrichtung kann an der Einströmfläche und/oder Ausströmfläche, also in eine Strömungsrichtung des Transportfluids vor oder nach dem ersten Wärmeaustauschmodul angeordnet sein. Das Benetzungsfluid kann aus einem Vorratsbehälter, bevorzugt der Auffangeinrichtung, zur Benetzungseinrichtung gepumpt werden.

Bevorzugt kann die Aufgabe der Flüssigkeit aus der Benetzungseinrichtung an und/oder oberhalb einer oberen Stirnseite des Wärmeaustauschmoduls erfolgen, sodass die Flüssigkeit von einer oberen Stirnseite zu einer unteren Stirnseite des Wärmeaustauschmoduls strömt bzw. geführt wird. Die Flüssigkeit, insbesondere ein Flüssigkeitsüberschuss, also der Teil der Flüssigkeit der nicht verdunstet wird, kann einer Auffangeinrichtung, die an der unteren Stirnseite des Wärmeaustauschmoduls angeordnet sein kann, zuführbar und/oder mit der Auffangeinrichtung sammelbar sein. Die Auffangeinrichtung kann insbesondere deshalb vorgesehen sein, da die Flüssigkeitsmenge der aus der Benetzungseinrichtung ausströmenden Flüssigkeit bereits mit einem Flüssigkeitsüberschuss erfolgt, d.h. es strömt beispielsweise eine 10fach höhere Flüssigkeitsmenge aus der Benetzungseinrichtung aus, als verdunstet wird.

Als untere Stirnseite des ersten Wärmeaustauschmoduls ist hierbei im Folgenden das Ende des ersten Wärmeaustauschmoduls zu verstehen, das an der der Auffangeinrichtung zugewandten Stirnseite des Wärmeaustauschmoduls angeordnet ist. Als eine obere Stirnseite des ersten Wärmeaustauschmoduls ist das Ende des ersten Wärmeaustauschmoduls zu verstehen, das auf der der Auffangeinrichtung abgewandten Stirnseite des Wärmeaustauschmoduls angeordnet ist. Die untere Stirnseite des ersten Wärmeaustauschmoduls weist also einen kleineren Abstand zur Auffangeinrichtung auf, als die obere Stirnseite des ersten Wärmeaustauschmoduls. Die untere Stirnseite und obere Stirnseite des ersten Wärmeaustauschmoduls können aber auch einen gleichen Abstand zur Auffangeinrichtung aufweisen.

Erfindungsgemäß ist an einer unteren Stirnseite des ersten Wärmeaustauschmoduls die Auffangeinrichtung angeordnet und die erste Filtermatte ist zwischen der Benetzungseinrichtung und der Auffangeinrichtung angeordnet.

Die Auffangeinrichtung kann zumindest teilweise als ein Auffangblech und/oder eine Auffangwanne mit einer Wannenöffnung ausgebildet sein. Die Auffangeinrichtung, insbesondere die Auffangwanne, kann als ein Vorratsbehälter für die Flüssigkeit der Benetzungseinrichtung ausgebildet sein, sodass die aus der Benetzungseinrichtung ausströmbare Flüssigkeit in der Auffangeinrichtung sammelbar und wiederverwendbar ist. Die Wärmeaustauschvorrichtung, insbesondere die Benetzungseinrichtung, kann eine Benetzungspumpe umfassen, um die in der Auffangeinrichtung gesammelte Flüssigkeit beispielsweise zur Benetzungseinrichtung, insbesondere dem Benetzungselement, zu pumpen, sodass die Benetzungseinrichtung und die Auffangeinrichtung einen Kreislauf für die Flüssigkeit bilden. Die Auffangeinrichtung kann aber auch einen Ablauf mit einer Ablauföffnung umfassen, aus dem die Flüssigkeit ablaufen kann.

Vorteilhafterweise weist die erste Filtermatte somit neben den bereits genannten Vorteilen ausserdem eine Schallminderungsfunktion auf, da die Flüssigkeit, insbesondere der Flüssigkeitsüberschuss, schallgedämpft auf die Filtermatte geführt werden kann und nicht tropfenförmig und/oder ungedämpft auf eine Flüssigkeitsoberfläche an der Auffangeinrichtung auftrifft. Darüber hinaus wird dadurch, dass der oder die Partikel an der ersten Filtermatte abscheidbar sind und nicht von der Flüssigkeit an, bevorzugt in, die Auffangeinrichtung mitgeführt werden, verhindert, dass der oder die Partikel den Ablauf der Auffangeinrichtung und/oder einen Zulauf der Benetzungspumpe, mit dem der Benetzungspumpe die Flüssigkeit aus der Auffangeinrichtung zuführbar ist, verstopfen, sodass ein Trockenlaufen der Benetzungspumpe verhindert wird.

Erfindungsgemäß ist die erste Filtermatte derart zwischen der Auffangeinrichtung und der unteren Stirnseite des ersten Wärmeaustauschmoduls angeordnet, dass die Flüssigkeit mit der ersten Filtermatte zur Auffangeinrichtung führbar ist. In einer weiteren Ausgestaltung der Erfindung ist an der unteren Stirnseite des ersten Wärmeaustauschmoduls ein Abtropfelement vorgesehen und die erste Filtermatte ist derart zwischen dem Abtropfelement und der Auffangeinrichtung angeordnet und/oder die erste Filtermatte ist derart an der Auffangeinrichtung und/oder an dem Abtropfelement angeordnet, dass die aus der Benetzungseinrichtung ausströmende Flüssigkeit mit dem Abtropfelement zur ersten Filtermatte führbar ist.

Das Abtropfelement führt die Flüssigkeit, insbesondere den Flüssigkeitsüberschuss, sowie den oder die von der Flüssigkeit mitgeführten Partikel auf einfache. Art und Weise zur ersten Filtermatte, sodass die Flüssigkeit nicht unkontrolliert an bzw. in der Wärmeaustauschvorrichtung verteilt wird. Der oder die von der Flüssigkeit mitgeführten Partikel sind dann vorteilhafterweise an der ersten Filtermatte abscheidbar, sodass der oder die Partikel nicht von der Flüssigkeit an oder in die Benetzungseinrichtung und/oder die Benetzungspumpe und/oder die Auffangeinrichtung und/oder das Wärmeaustauschmodul mitgeführt werden und/oder sich dort nicht an- oder ablagern.

In einem Beispiel außerhalb des Schutzumfangs der Erfindung ist die erste Filtermatte derart zwischen der Benetzungseinrichtung und einer oberen Stirnseite des ersten Wärmeaustauschmoduls angeordnet und/oder die erste Filtermatte derart an der Benetzungseinrichtung und/oder an der oberen Stirnseite des ersten Wärmeaustauschmoduls angeordnet, dass die aus der Benetzungseinrichtung ausströmende Flüssigkeit mittels der ersten Filtermatte sammelbar und das erste Wärmeaustauschmodul mit der aus der ersten Filtermatte ausströmenden Flüssigkeit benetzbar ist. Bei einer solchen Ausgestaltung sind von Vorteil der oder die Partikel, die von der aus der Benetzungseinrichtung ausbringbaren Flüssigkeit mitgeführt werden, an der ersten Filtermatte abscheidbar, sodass die Flüssigkeit das erste Wärmeaustauschmodul gereinigt, also mit wenigen und/oder keinen mitgeführten Partikeln benetzt. Vorteilhafterweise ist so auch das erste Wärmeaustauschmodul einfacher und/oder gezielter mit der aus der Benetzungseinrichtung ausbringbaren Flüssigkeit benetzbar, da die Flüssigkeit mittels der ersten Filtermatte an das erste Wärmeaustauschmodul führbar ist.

In Ausgestaltung der Erfindung weist die Wärmeaustauschvorrichtung eine Abdeckung mit einer Halterung auf, und die erste Filtermatte ist an, bevorzugt in, der Halterung angeordnet. Wie bereits erwähnt, ist die Auffangeinrichtung zumindest teilweise als eine Auffangwanne ausgebildet. Die Abdeckung ist derart an der Wannenöffnung der Auffangwanne anordenbar, dass die Wannenöffnung mit der Abdeckung zumindest teilweise abgedeckt ist und die Halterung mit der ersten Filtermatte zwischen der Auffangeinrichtung und der unteren Stirnseite des ersten Wärmeaustauschmoduls angeordnet ist und/oder die Halterung mit der ersten Filtermatte an der Auffangeinrichtung und/oder an der unteren Stirnseite des ersten Wärmeaustauschmoduls angeordnet ist.

Die Halterung mit der ersten Filtermatte kann aber auch zwischen dem Abtropfelement und der Auffangeinrichtung, bevorzug an der Auffangwanne, besonders bevorzug an der Wannenöffnung der Auffangwanne, und/oder am Abtropfelement angeordnet sein.
Neben den bereits oben genannten Vorteilen ermöglicht die Anordnung der ersten Filtermatte an, bevorzugt in, der Halterung der Abdeckung vorteilhafterweise eine Doppelfunktion der Abdeckung, die zumindest teilweise Abdeckung der Auffangeinrichtung wird mit der Halterung für die erste Filtermatte zusammengeführt. Einerseits wird die Auffangeinrichtung, bevorzugt die Auffangwanne, nämlich vor dem Einfall von Sonnenstrahlen abgeschirmt, um Algenwachstum im Becken zu vermeiden, und andererseits wird die erste Filtermatte auf einfache Art und Weise an der Wärmeaustauschvorrichtung angeordnet. Ein weitere Vorteil ist, dass die Abdeckung mit der Halterung und mit der Filtermatte so auf einfach Art und Weise nachgerüstet und/oder die erste Filtermatte gereinigt werden kann, ohne das aufwändige Umbaumassnahmen an der Wärmeaustauschvorrichtung notwendig wären.

In Ausgestaltung der Erfindung ist die erste Filtermatte an, bevorzugt in, einer Schiene angeordnet, und die Schiene mit der ersten Filtermatte ist zwischen der Auffangeinrichtung und der unteren Stirnseite des ersten Wärmeaustauschmoduls angeordnet und/oder die Schiene mit der ersten Filtermatte an der Auffangeinrichtung und/oder an der unteren Stirnseite des ersten Wärmeaustauschmoduls angeordnet ist. Die Auffangeinrichtung ist zumindest teilweise als ein Auffangblech ausgebildet und die Schiene mit der ersten Filtermatte ist zwischen dem Auffangblech und der unteren Stirnseite des ersten Wärmeaustauschmoduls angeordnet und/oder die Schiene mit der ersten Filtermatte ist an dem Auffangblech und/oder an der unteren Stirnseite des ersten Wärmeaustauschmoduls angeordnet.

Die Schiene mit der ersten Filtermatte kann aber auch zwischen dem Abtropfelement und der Auffangeinrichtung, bevorzugt am Auffangblech, und/oder am Abtropfelement angeordnet sein.

Neben den bereits oben genannten Vorteilen ermöglicht diese Massnahme eine besonders einfache Anordnung der Schiene mit der ersten Filtermatte an der Wärmeaustauschvorrichtung, insbesondere wenn keine Abdeckung an der Wärmeaustauschvorrichtung vorgesehen ist. Ein weitere Vorteil ist, dass die Schiene mit der Filtermatte so auf einfach Art und Weise nachgerüstet und/oder die erste Filtermatte gereinigt werden kann, ohne das aufwändige Umbaumassnahmen an einer Wärmeaustauschvorrichtung notwendig wären.

Erfindungsgemäß umfasst die Wärmeaustauschvorrichtung ein zweites Wärmeaustauschmodul, wobei das zweite Wärmeaustauschmodul mit der aus der Benetzungseinrichtung ausbringbaren Flüssigkeit benetzbar ist, und die Halterung mit der ersten Filtermatte zwischen der unteren Stirnseite des ersten Wärmeaustauschmoduls, bevorzugt dem Abtropfelement, und der Auffangeinrichtung angeordnet ist und/oder die Halterung mit der ersten Filtermatte an der unteren Stirnseite des ersten Wärmeaustauschmoduls, bevorzugt am Abtropfelement, und/oder an der Auffangeinrichtung, bevorzugt an der Auffangwanne, angeordnet ist. An, bevorzugt in, der Schiene ist eine zweite Filtermatte angeordnet, wobei die Schiene zwischen der unteren Stirnseite des zweiten Wärmeaustauschmoduls und der Auffangeinrichtung angeordnet ist und/oder die Schiene mit der zweiten Filtermatte an der unteren Stirnseite des zweiten Wärmeaustauschmoduls, bevorzugt dem Abtropfelement, und/oder an der Auffangeinrichtung, bevorzugt am Auffangblech, angeordnet ist. Das zweite Wärmeaustauschmodul kann einen vom ersten Wärmeaustauschmodul verschiedenen oder gemeinsamen Kreislauf für das Kältemittel aufweisen. In Bezug auf Aufbau und Funktion können das zweite Wärmeaustauschmodul und das erste Wärmeaustauschmodul identisch sein, oder aber auch verschieden ausgestaltet sein. Die erste Filtermatte und die zweite Filtermatte können in Bezug auf Material, Form und Geometrie identisch sein, können in Bezug auf Material, Form und Geometrie aber auch verschieden ausgestaltet sein.

In Ausgestaltung der Erfindung ist das erste Wärmeaustauschmodul in einem Neigungswinkel von 10 Grad ≤ a ≤ 170 Grad, bevorzugt 20 Grad ≤ a ≤ 60 Grad, zur Vertikalrichtung und/oder das zweite Wärmeaustauschmodul in einem Neigungswinkel von 10 Grad ≤ b ≤ 170 Grad, bevorzugt 20 Grad ≤ b ≤ 60 Grad, zur Vertikalrichtung und/oder das erste Wärmeaustauschmodul und das zweite Wärmeaustauschmodul sind parallel angeordnet. Das erste Wärmeaustauschmodul und das zweite Wärmeaustauschmodul können also in den Winkeln a und b, wobei bevorzugt a gleich b gilt, zur Vertikalrichtung angeordnet sein.

In Ausgestaltung der Erfindung weisen die Schiene und/oder die Halterung der Abdeckung ein Befestigungselement auf, sodass die erste Filtermatte und/oder die zweite Filtermatte an der Schiene und/oder an der Halterung mittels der Befestigungselemente befestigbar sind, insbesondere lösbar befestigbar sind. Das Befestigungselement kann einteilig ausgebildet sein, beispielsweise können die Schiene und/oder die Halterung der Abdeckung eine Klemmverbindung und/oder Klipse aufweisen. Das Befestigungselement kann aber auch zweiteilig ausgebildet sein, beispielsweise als ein Druckknopf und/oder ein Klettverschluss und/oder eine Steckverbindung, bevorzugt eine Steckverbindung umfassend einen Kugelbolzen und eine Kupplung, wobei die Schiene und/oder die Halterung der Abdeckung einen ersten Teil des zweiteiligen Befestigungselements und die erste und/oder zweite Filtermatte einen zweiten Teil des zweiteiligen Befestigungselements umfassen. Durch diese Massnahme können die erste Filtermatte und/oder zweite Filtermatte vorteilhafterweise an der Halterung und/oder an der Schiene verrutsch fest angeordnet und/oder von diesen entfernbar sein.

In Ausgestaltung der Erfindung ist die erste Filtermatte und/oder die zweite Filtermatte aus Kunststoff, bevorzugt aus einem Polyurethan und/oder einem Polyether, besonders bevorzugt aus einem Polyurethan Schaum und/oder einem Polyether Schaum ist.

Die erste Filtermatte und/oder zweite Filtermatte können bevorzugt aus Polyurethan mit einer inneren Oberfläche von 20 bis 25 cm² pro cm³ sein. Die erste Filtermatte und/oder zweite Filtermatte können aus einem Material, bevorzugt Polyurethan, besonders bevorzugt Polyurethan Schaum sein, das eine Rohdichte von 18 - 26 kg/m³, insbesondere nach ISO 845, bevorzugt eine Rohdichte von 22 kg/m³ aufweist, und/oder eine Stauchhärte von 2,5 - 4,5 kPa, insbesondere mit einer 40% Verformung und/oder nach DIN EN ISO 33861, bevorzugt eine Stauchhärte von 3,5 kPa, und/oder eine Porendichte von 1 bis 4 Poren pro cm², bevorzugt von 1,4 bis 3,8, besonders bevorzugt von 1,55 oder 2,63 bis 3,56, insbesondere nach dem Testverfahren RPA-1002, aufweist. Die erste Filtermatte und/oder zweite Filtermatte können auch aus einem Material, bevorzugt Polyether, besonders bevorzugt einem Polyether basierten Schaum sein, das eine Dichte von 20 bis 28 kg pro m³, bevorzugt von 22,43 bis 25,63 kg pro m³, und/oder eine Zugfestigkeit von mindestens 90 kPa, bevorzugt 100 kPa, und/oder eine Elongation von mindestens 80%, bevorzugt mindestens 90%, und/oder eine Porendichte von 1 bis 4 Poren pro cm², bevorzugt von 1,4 bis 3,8, besonders bevorzugt von 1,55 oder 2,63 bis 3,56, insbesondere alle nach ASTM D 3574 gemessen, aufweist. Die erste Filtermatte und/oder zweite Filtermatte können aber auch aus einem Material sein, das wasserdurchlässig ist und/oder eine Maschung aufweist und/oder wasserbeständig und/oder reinigbar und/oder recyclebar ist. Das Material der ersten Filtermatte und/oder zweiten Filtermatte kann ein nachgiebiges und/oder poriges und/oder offenzelliges und/oder durchflussfähiges Gewebe sein. Die erste Filtermatte und/oder zweite Filtermatte können aber auch aus PPI und/oder Keramik und/oder Edelstahlgewirk/-gestrick und/oder Schwämme und/oder Granulat sein. Das Granulat kann beispielsweise eine offenporige Blähtonkugel sein, die bevorzugt in einem formgebenden Beutel angeordnet sein kann.

Im Folgenden wird die Erfindung anhand von Ausführungsbeispielen unter Bezugnahme auf die Zeichnung näher erläutert. In der schematischen Zeichnung zeigt:
- Fig. 1: eine schematische Schnittdarstellung eines Ausführungsbeispiels einer erfindungsgemässen Wärmeaustauschvorrichtung,
- Fig. 2: eine perspektivische Darstellung eines Ausführungsbeispiels einer erfindungsgemässen Schiene,
- Fig. 3: eine perspektivische Darstellung eines Ausführungsbeispiels einer erfindungsgemässen Abdeckung,

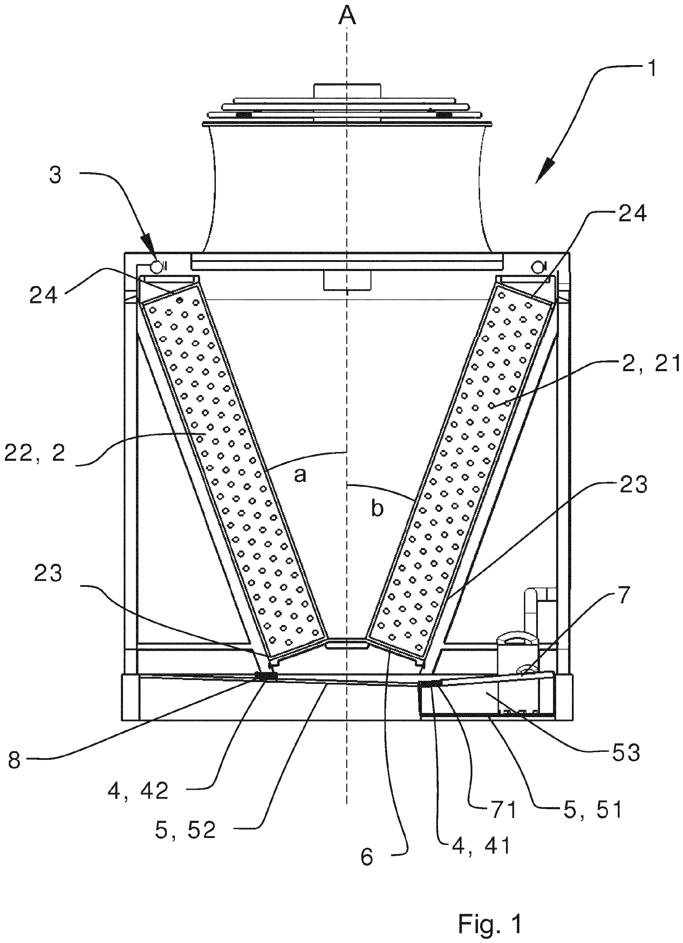

Fig. 1 zeigt schematische Darstellung eines ersten Ausführungsbeispiels einer erfindungsgemässen Wärmeaustauschvorrichtung 1. Die Wärmeaustauschvorrichtung 1 umfasst ein erstes Wärmeaustauschmodul 2, 21 und eine Benetzungseinrichtung 3. Das erste Wärmeaustauschmodul 2, 21 ist für den Wärmeaustausch zwischen einem Transportfluid und einem Kältemittel vorgesehen, wobei das erste Wärmeaustauschmodul 2, 21 vom Transportfluid umströmbar ist und das Kältemittel getrennt vom Transportfluid im ersten Wärmeaustauschmodul 2 führbar ist. Die Wärmeaustauschvorrichtung umfasst ausserdem ein zweites Wärmeaustauschmodul 2, 22, wobei das zweite Wärmeaustauschmodul 2, 22 ebenfalls vom Transportfluid umströmbar ist und das Kältemittel getrennt vom Transportfluid im zweiten Wärmeaustauschmodul 2, 22 führbar ist. In Bezug auf Aufbau und Funktion stimmt das zweite Wärmeaustauschmodul 2, 22 mit dem ersten Wärmeaustauschmodul 2, 21 über, kann aber in Bezug auf Aufbau und Funktion auch vom ersten Wärmeaustauschmodul 2, 21 verschieden ausgestaltet sein.

Das erste Wärmeaustauschmodul 2, 21 und das zweite Wärmeaustauschmodul 2, 22 sind einem a und b, wobei a gleich b gilt, zur Vertikalrichtung A angeordnet. Das erste Wärmeaustauschmodul 2, 21 kann aber auch in einem Neigungswinkel 10 Grad ≤ a ≤ 170 Grad zur Vertikalrichtung A und/oder das zweite Wärmeaustauschmodul 2, 22 in einem Neigungswinkel 10 Grad ≤ b ≤ 170 Grad zur Vertikalrichtung A und/oder das erste Wärmeaustauschmodul 2, 21 und das zweite Wärmeaustauschmodul 2, 22 können parallel angeordnet sein.

Die Benetzungseinrichtung 3 ist derart vorgesehen und angeordnet, dass das erste Wärmeaustauschmodul 2, 21 und das zweite Wärmeaustauschmodul 2, 22 mit einer aus der Benetzungseinrichtung 3 ausbringbaren Flüssigkeit benetzbar ist. Die Benetzungseinrichtung 3 kann aber auch derart ausgestaltet sein, dass nur das erste Wärmeaustauschmodul 2, 21 oder das zweite Wärmeaustauschmodul 2, 22 mit einer aus der Benetzungseinrichtung 3 ausbringbaren Flüssigkeit benetzbar ist.

An einer unteren Stirnseite 23 des ersten Wärmeaustauschmoduls 2, 21 und des zweiten Wärmeaustauschmoduls 2, 22 ist eine Auffangeinrichtung 5 angeordnet, mit welcher die von der Benetzungseinrichtung 3 ausbringbare Flüssigkeit sammelbar ist. Die Auffangeinrichtung 5 kann aber auch nur an der unteren Stirnseite 23 des ersten Wärmeaustauschmoduls 2, 21 oder nur an der unteren Stirnseite 23 des zweiten Wärmeaustauschmoduls 2, 22 angeordnet sein. Die Auffangeinrichtung 5 ist zumindest teilweise als eine Auffangwanne 5, 51 ausgebildet, wobei die Auffangwanne 5, 51 eine Wannenöffnung 53 aufweist, und/oder zumindest teilweise als ein Auffangblech 5, 52 ausgebildet.

Als untere Stirnseite 23 des ersten Wärmeaustauschmoduls 2,21 ist hierbei im Folgenden das Ende des ersten Wärmeaustauschmoduls 2, 21 zu verstehen, das an der der Auffangeinrichtung 5 zugewandten Stirnseite des ersten Wärmeaustauschmoduls 2, 21 angeordnet ist. Als eine obere Stirnseite 24 des ersten Wärmeaustauschmoduls 2, 21 ist das Ende des ersten Wärmeaustauschmoduls 2, 21 zu verstehen, das auf der der Auffangeinrichtung 5 abgewandten Stirnseite des ersten Wärmeaustauschmoduls 2, 21 angeordnet ist. Die untere Stirnseite 23 des ersten Wärmeaustauschmoduls 2, 21 weist also einen kleineren oder gleichen Abstand zur Auffangeinrichtung 5 auf, als die obere Stirnseite 24 des ersten Wärmeaustauschmoduls 2, 21.

An einer unteren Stirnseite 23 des ersten Wärmeaustauschmoduls 2, 21 und zweiten Wärmeaustauschmoduls 2, 22 ist ein Abtropfelement 6 vorgesehen. Mit dem Abtropfelement 6 ist ein Flüssigkeitsüberschuss, also der Teil der Flüssigkeit, der von der Benetzungseinrichtung 3 ausgebracht wird, aber nicht verdunstet, zumindest teilweise sammelbar und ableitbar. Das Abtropfelement kann aber auch nur an der unteren Stirnseite 23 des ersten Wärmeaustauschmoduls 2, 21 oder nur an der unteren Stirnseite 23 des zweiten Wärmeaustauschmoduls 2, 22 vorgesehen sein.

Die Wärmeaustauschvorrichtung weist weiter eine Abdeckung 7 mit einer Halterung 71 und eine Schiene 8 auf, wobei die Wärmeaustauschvorrichtung auch nur eine Abdeckung 7 mit einer Halterung 71 oder nur eine Schiene 8 aufweisen kann. Die Wärmeaustauschvorrichtung 1 umfasst erfindungsgemäss eine erste Filtermatte 4, 41 und eine zweite Filtermatte 4,42 die derart ausgestaltet und an der Wärmeaustauschvorrichtung 1 angeordnet sind, dass die aus der Benetzungseinrichtung 3 ausströmende Flüssigkeit mit der ersten Filtermatte 4, 41 und/oder der zweiten Filtermatte 4,42 sammelbar ist und/oder ein von der Flüssigkeit mitgeführter Partikel an der ersten Filtermatte 4, 41 und/oder der zweiten Filtermatte 4,42 abscheidbar ist. Die erste Filtermatte 4, 41 und/oder zweite Filtermatte 4, 42 können hierbei zwischen der Benetzungseinrichtung 3 und der Auffangeinrichtung 5 und/oder an der Auffangeinrichtung 5 angeordnet sein.

Wie in Fig. 1 zu erkennen ist, ist im vorliegenden ersten Ausführungsbeispiel die erste Filtermatte 4, 41 in der Halterung 71 der Abdeckung 7 und die zweite Filtermatte 4, 42 in der Schiene angeordnet. Die Schiene 8 und/oder die Halterung 71 der Abdeckung 7 können Befestigungselemente (nicht dargestellt) aufweisen, sodass die erste Filtermatte 4, 41 und/oder zweite Filtermatte 4, 42 an der Schiene 8 und/oder an der Halterung 71 mittels der Befestigungselemente befestigbar sind, insbesondere lösbar befestigbar sind.

Die Abdeckung 7 ist derart an der Wannenöffnung 53 der Auffangwanne 51 angeordnet, dass die Wannenöffnung 53 mit der Abdeckung 7 zumindest teilweise abgedeckt ist und die Halterung 71 mit der ersten Filtermatte 4, 41 zwischen der unteren Stirnseite 23 des ersten Wärmeaustauschmoduls 2, 21 und der Auffangeinrichtung 5, insbesondere zwischen dem Abtropfelement 6 und der Auffangeinrichtung 5, angeordnet ist. Die Halterung 71 mit der ersten Filtermatte 4, 41 kann aber auch an der Auffangeinrichtung 5, bevorzug an der Auffangwanne 51, besonders bevorzug an der Wannenöffnung 53 der Auffangwanne 51, und/oder am Abtropfelement 6 und/oder an der unteren Stirnseite 23 des ersten Wärmeaustauschmoduls 2, 21 angeordnet sein, wenn das Abtropfelement 6 nicht vorhanden ist.

Die Schiene 8 mit der zweiten Filtermatte 4, 42 ist zwischen der unteren Stirnseite 23 des zweiten Wärmeaustauschmoduls 2, 22 und der Auffangeinrichtung 5, insbesondere zwischen dem Abtropfelement 6 und der Auffangeinrichtung 5, angeordnet. Die Schiene 8 mit der zweiten Filtermatte 4, 41 kann aber auch an der Auffangeinrichtung 5, bevorzug am Auffangblech 52, und/oder am Abtropfelement 6 und/oder an der unteren Stirnseite 23 des zweiten Wärmeaustauschmoduls 2, 22 angeordnet sein, wenn das Abtropfelement 6 nicht vorhanden ist.

Somit wird in einem Betriebszustand der Wärmeaustauschvorrichtung 1, die aus der Benetzungseinrichtung 3 ausströmende Flüssigkeit, insbesondere der Flüssigkeitsüberschuss, zumindest teilweise mit dem Abtropfelement 6 zur ersten Filtermatte 4, 41 und/oder der zweiten Filtermatte 4, 42 geführt und von der ersten Filtermatte 4, 41 und/oder der zweiten Filtermatte 4, 42 gesammelt und/oder ein von der Flüssigkeit mitgeführter Partikel an der ersten Filtermatte 4, 41 und/oder zweiten Filtermatte 4, 42 abgeschieden. Von der ersten Filtermatte 4, 41 und/ oder der zweiten Filtermatte 4, 42 wiederum wird die Flüssigkeit weiter zur Auffangeinrichtung 5 geführt.

Die Wärmeaustauschvorrichtung kann gemäß eines Beispiels außerhalb des Schutzumfangs der Erfindung auch derart ausgestaltet sein, dass die erste Filtermatte 4, 41 und/oder die zweite Filtermatte 4, 41, derart zwischen der Benetzungseinrichtung 3 und einer oberen Stirnseite 24 des ersten Wärmeaustauschmoduls 2, 21 und/oder des zweiten Wärmeaustauschmoduls 2, 22 und/oder an der Benetzungseinrichtung (3) und/oder an der oberen Stirnseite 24 des ersten Wärmeaustauschmoduls 2, 21 und/oder zweiten Wärmeaustauschmoduls 2,22 angeordnet sein können, dass die aus der Benetzungseinrichtung 3 ausströmende Flüssigkeit mit der ersten Filtermatte 4, 41 und/oder der zweiten Filtermatte 4, 42 sammelbar und das erste Wärmeaustauschmodul 2, 21 und/oder das zweite Wärmeaustauschmodul 2, 22 mit der aus der ersten Filtermatte 4, 41 und/oder der zweiten Filtermatte 4, 42 ausströmenden Flüssigkeit benetzbar ist. Die erste Filtermatte 4, 41 und/oder die zweite Filtermatte 4, 41 können hierbei bevorzugt in der Schiene angeordnet sein.

Die erste Filtermatte 4, 41 und/oder zweite Filtermatte 4, 42 können aus einem Material sein, das wasserdurchlässig ist und/oder eine Maschung aufweist und/oder wasserbeständig und/oder reinigbar und/oder recyclebar ist. Das Material der ersten Filtermatte 4, 41 und/oder zweiten Filtermatte 4, 42 kann ein nachgiebiges und/oder poriges und/oder offenzelliges und/oder durchflussfähiges Gewebe sein. Die erste Filtermatte 4, 41 und/oder zweite Filtermatte 4, 42 können aus Kunststoff sein, bevorzugt aus einem Polyurethan und/oder einem Polyethylen, besonders bevorzugt aus einem Polyurethan Schaum und/oder einem Polyethylen Schaum. Die erste Filtermatte 4, 41 und/oder zweite Filtermatte 4, 42 können aber auch aus Keramik und/oder Edelstahlgewirk/-gestrick und/oder Schwämme und/oder Granulat sein. Das Granulat kann beispielsweise eine offenporige Blähtonkugel sein, die bevorzugt in einem formgebenden Beutel angeordnet sein kann.

Die erste Filtermatte 4, 41 und zweiten Filtermatte 4,42 können identisch sein, also beispielsweise aus dem gleichen Material bestehen und/oder die gleiche Form aufweisen, oder aber verschieden sein, also beispielsweise aus dem verschiedenen Materialien bestehen und/oder die unterschiedliche Formen aufweisen.

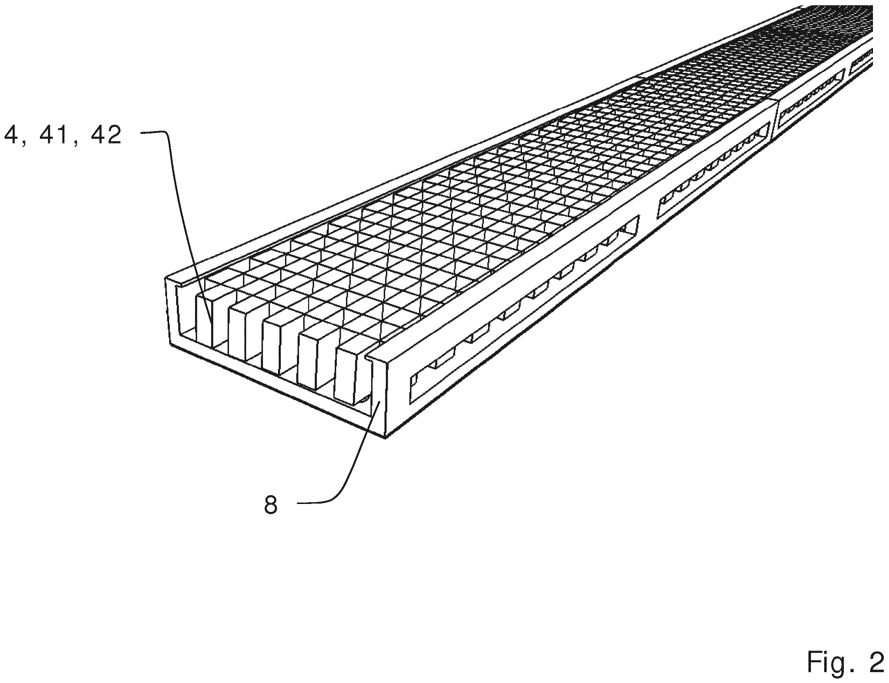

Fig. 2 zeigt eine perspektivische Darstellung eines Ausführungsbeispiels einer Schiene 8. Die Schiene ist für eine Wärmeaustauschvorrichtung 1 geeignet, wobei in der Schiene 8 eine erste Filtermatte 4, 41 und/oder zweite Filtermatte 4, 42 angeordnet ist.

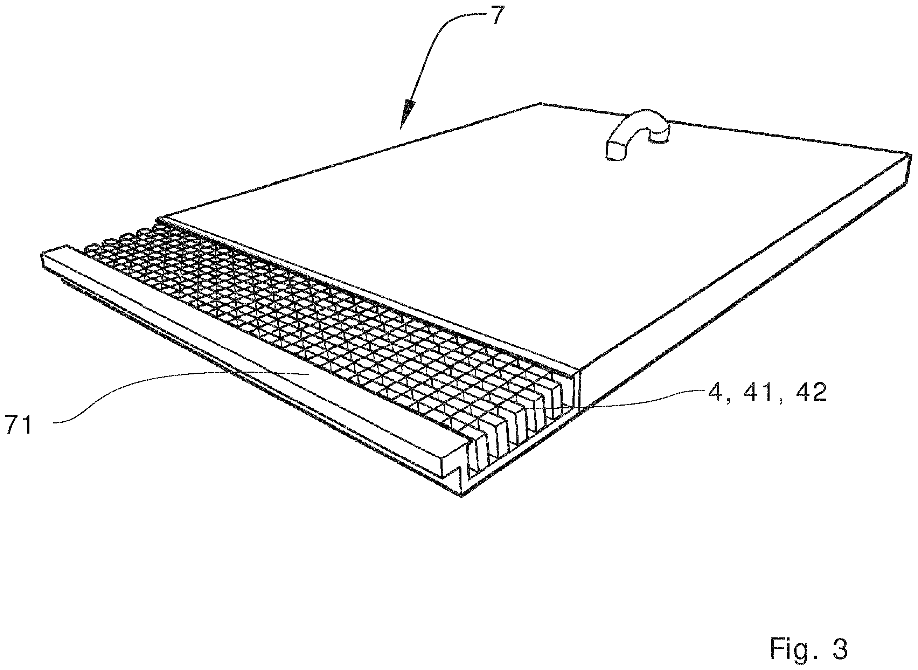

Fig. 3 zeigt eine perspektivische Darstellung eines Ausführungsbeispiels einer Abdeckung 7. Die Abdeckung 7 weist eine Halterung 71 auf und in der Halterung 71 ist eine Filtermatte 4 angeordnet.

## Patentansprüche

1. Wärmeaustauschvorrichtung (1) umfassend
- ein erstes Wärmeaustauschmodul (2, 21) für den Wärmeaustausch zwischen einem Transportfluid und einem Kältemittel, wobei das erste Wärmeaustauschmodul (2, 21) vom Transportfluid umströmbar ist und das Kältemittel getrennt vom Transportfluid im ersten Wärmeaustauschmodul (2) führbar ist;
- eine Benetzungseinrichtung (3), die derart vorgesehen und angeordnet ist, dass das erste Wärmeaustauschmodul (2, 21) mit einer aus der Benetzungseinrichtung (3) ausbringbaren Flüssigkeit benetzbar ist;
- eine erste Filtermatte (4, 41) die derart ausgestaltet und an der Wärmeaustauschvorrichtung (1) angeordnet ist, dass die aus der Benetzungseinrichtung (3) ausströmende Flüssigkeit mit der ersten Filtermatte (4, 41) sammelbar ist und/oder ein von der Flüssigkeit mitgeführter Partikel an der ersten Filtermatte (4, 41) abscheidbar ist;
- eine Auffangeinrichtung (5) die an einer unteren Stirnseite (23) des ersten Wärmeaustauschmoduls (2, 21) angeordnet ist; wobei die erste Filtermatte (4, 41) zwischen der Benetzungseinrichtung (3) und der Auffangeinrichtung (5) angeordnet ist, und wobei die erste Filtermatte (4, 41) zwischen der Auffangeinrichtung (5) und der unteren Stirnseite (23) des ersten Wärmeaustauschmoduls (2, 21) angeordnet ist, sodass die Flüssigkeit durch die erste Filtermatte (4, 41) zur Auffangeinrichtung (5) gelangt,
**dadurch gekennzeichnet, dass**
- die Wärmeaustauschvorrichtung ein zweites Wärmeaustauschmodul (2, 22) umfasst, wobei das zweite Wärmeaustauschmodul (2, 22) mit der aus der Benetzungseinrichtung (3) ausbringbaren Flüssigkeit benetzbar ist;
- eine zweite Filtermatte (4, 42) derart ausgestaltet und an der Wärmeaustauschvorrichtung (1) angeordnet ist, dass die aus der Benetzungseinrichtung (3) ausströmende Flüssigkeit mit der zweiten Filtermatte (4, 42) sammelbar ist und/oder ein von der Flüssigkeit mitgeführter Partikel an der zweiten Filtermatte (4, 42) abscheidbar ist und wobei die zweite Filtermatte (4, 42) an einer unteren Stirnseite (23) des zweiten Wärmeaustauschmoduls (2, 22) angeordnet ist; und wobei
- das erste und/oder das zweite Wärmeaustauschmodul (2,21), (2,22) aus einem lamellierten Wärmeaustauscher besteht.

2. Wärmeaustauschvorrichtung nach Anspruch 1, wobei an der unteren Stirnseite (23) des ersten Wärmeaustauschmoduls (2, 21) ein Abtropfelement (6) vorgesehen ist und die erste Filtermatte (4, 41) derart zwischen dem Abtropfelement (6) und der Auffangeinrichtung (5) angeordnet ist und/oder die erste Filtermatte (4, 41) derart an der Auffangeinrichtung (5) und/oder an dem Abtropfelement (6) angeordnet ist, dass die aus der Benetzungseinrichtung (3) ausströmende Flüssigkeit mit dem Abtropfelement (6) zur ersten Filtermatte (4, 41) führbar ist.

3. Wärmeaustauschvorrichtung nach einem der Ansprüche 1 oder 2, wobei die Wärmeaustauschvorrichtung eine Abdeckung (7) mit einer Halterung (71) aufweist, und die erste Filtermatte (4, 41) an, bevorzugt in der Halterung (71) angeordnet ist.

4. Wärmeaustauschvorrichtung nach einem der vorangehenden Ansprüche, wobei die Auffangeinrichtung (5) zumindest teilweise als eine Auffangwanne (51) ausgebildet ist, und die Abdeckung (7) derart an einer Wannenöffnung (53) der Auffangwanne (51) anordenbar ist, dass die Wannenöffnung (53) mit der Abdeckung (7) zumindest teilweise abgedeckt ist und die Halterung (71) mit der ersten Filtermatte (4, 41) zwischen der Auffangeinrichtung (5) und der unteren Stirnseite (23) des ersten Wärmeaustauschmoduls (2, 21) angeordnet ist und/oder die Halterung (71) mit der ersten Filtermatte (4, 41) an der Auffangeinrichtung (5) und/oder an der unteren Stirnseite (23) des ersten Wärmeaustauschmoduls (2, 21) angeordnet ist.

5. Wärmeaustauschvorrichtung nach einem der vorangehenden Ansprüche, wobei die erste Filtermatte (4, 41) an, bevorzugt in einer Schiene (8) angeordnet ist, und die Schiene (8) mit der ersten Filtermatte (4, 41) zwischen der Auffangeinrichtung (5) und der unteren Stirnseite (23) des ersten Wärmeaustauschmoduls (2, 21) angeordnet ist und/oder die Schiene (8) mit der ersten Filtermatte (4, 41) an der Auffangeinrichtung (5) und/oder an der unteren Stirnseite (23) des ersten Wärmeaustauschmoduls (2, 21) angeordnet ist.

6. Wärmeaustauschvorrichtung nach einem der vorangehenden Ansprüche, wobei die Auffangeinrichtung (5) zumindest teilweise als ein Auffangblech (52) ausgebildet ist, und die Schiene (8) mit der ersten Filtermatte (4, 41) zwischen dem Auffangblech (52) und der unteren Stirnseite (23) des ersten Wärmeaustauschmoduls (2, 21) angeordnet ist und/oder die Schiene (8) mit der ersten Filtermatte (4, 41) an dem Auffangblech (52) und/oder an der unteren Stirnseite (23) des ersten Wärmeaustauschmoduls (2, 21) angeordnet ist.

7. Wärmeaustauschvorrichtung nach einem der vorangehenden Ansprüche, wobei die Halterung (71) mit der ersten Filtermatte (4,41) zwischen der unteren Stirnseite (23) des ersten Wärmeaustauschmoduls (2, 21) und der Auffangeinrichtung (5) angeordnet ist und/oder die Halterung (71) mit der ersten Filtermatte (4) an der unteren Stirnseite (23) des ersten Wärmeaustauschmoduls (2, 21) und/oder an der Auffangeinrichtung (5) angeordnet ist, und an, bevorzugt in, der Schiene (8) die zweite Filtermatte (4, 42) angeordnet ist, wobei die Schiene (8) zwischen der unteren Stirnseite (23) des zweiten Wärmeaustauschmoduls (2, 22) und der Auffangeinrichtung (5) angeordnet ist und/oder die Schiene (8) mit der zweiten Filtermatte (4, 42) an der unteren Stirnseite (23) des zweiten Wärmeaustauschmoduls (2, 22) und/oder an der Auffangeinrichtung (5) angeordnet ist.

8. Wärmeaustauschvorrichtung nach einem der vorangehenden Ansprüche, wobei das erste Wärmeaustauschmodul (2, 21) in einem Neigungswinkel 10 Grad ≤ a ≤ 170 Grad zur Vertikalrichtung (A) und/oder das zweite Wärmeaustauschmodul (2, 22) in einem Neigungswinkel 10 Grad ≤ b ≤ 170 Grad zur Vertikalrichtung (A) und/oder das erste Wärmeaustauschmodul (2, 21) und das zweite Wärmeaustauschmodul (2, 22) parallel angeordnet sind.

9. Wärmeaustauschvorrichtung nach einem der vorangehenden Ansprüche, wobei die Schiene (8) und/oder die Halterung (71) der Abdeckung (7) ein Befestigungselement aufweisen, sodass die erste Filtermatte (4, 41) und/oder die zweite Filtermatte (4, 42) an der Schiene (8) und/oder an der Halterung (71) mittels der Befestigungselemente befestigbar sind, insbesondere lösbar befestigbar sind.

10. Wärmeaustauschvorrichtung nach einem der vorangehenden Ansprüche, wobei die erste Filtermatte (4, 41) und/oder die zweite Filtermatte (4, 42) aus Kunststoff ist, bevorzugt aus einem Polyurethan und/oder einem Polyether, besonders bevorzugt aus einem Polyurethan Schaum und/oder einem Polyether Schaum ist.

## Claims

1. Heat exchange device (1) comprising:
- a first heat exchange module (2, 21) for the heat exchange between a transport fluid and a refrigerant, wherein the transport fluid can flow around the first heat exchange module (2, 21) and the refrigerant can be guided separately from the transport fluid in the first heat exchange module (2);
- a wetting device (3) which is provided and arranged in such a way that the first heat exchange module (2, 21) can be wetted with a liquid dischargeable from the wetting device (3);
- a first filter mat (4, 41) designed and arranged on the heat exchange device (1) in such a way that the liquid discharged by the wetting device (3) can be collected with the first filter mat (4, 41) and/or a particle carried along by the liquid can be separated on the first filter mat (4, 41);
- a collecting device (5) which is arranged on a lower end face (23) of the first heat exchange module (2, 21); wherein the first filter mat (4, 41) is arranged between the wetting device (3) and the collecting device (5), and wherein the first filter mat (4, 41) is arranged between the collecting device (5) and the lower end face (23) of the first heat exchange module (2, 21) so that the liquid passes through the first filter mat (4, 41) to the collecting device (5),
**characterized in that**
- the heat exchange device comprises a second heat exchange module (2, 22), wherein the second heat exchange module (2, 22) can be wetted with the liquid dischargeable from the wetting device (3);
- a second filter mat (4, 42) is designed and arranged on the heat exchange device (1) in such a way that the liquid discharged by the wetting device (3) can be collected with the second filter mat (4, 42) and/or a particle carried along by the liquid can be separated on the second filter mat (4, 42), and wherein the second filter mat (4, 42) is arranged on a lower end face (23) of the second heat exchange module (2, 22); and wherein
- the first and/or the second heat exchange module (2, 21), (2, 22) consists of a laminated heat exchanger.

2. Heat exchange device according to claim 1, wherein a drip element (6) is provided on the lower end face (23) of the first heat exchange module (2, 21) and the first filter mat (4, 41) is arranged between the drip element (6) and the collecting device (5) and/or the first filter mat (4, 41) is arranged on the drip element (6) and/or on the collecting device (5) in such a way that the liquid discharged by the wetting device (3) can be guided with the drip element (6) to the first filter mat (4, 41).

3. Heat exchange device according to one of claims 1 or 2, wherein the heat exchange device has a cover (7) with a holder (71), and the first filter mat (4, 41) is arranged on, preferably in the holder (71).

4. Heat exchange device according to one of the preceding claims, wherein the collecting device (5) is at least partially designed as a collecting trough (51), and the cover (7) is arrangeable on a trough opening (53) of the collecting trough (51) in such a way that the trough opening (53) is at least partially covered by the cover (7) and the holder (71) with the first filter mat (4, 41), 41) is arranged between the collecting device (5) and the lower end face (23) of the first heat exchange module (2, 21) and/or the holder (71) with the first filter mat (4, 41) is arranged on the collecting device (5) and/or on the lower end face (23) of the first heat exchange module (2, 21).

5. Heat exchange device according to one of the preceding claims, wherein the first filter mat (4, 41) is arranged on a rail (8), preferably in the rail (8), and the rail (8) with the first filter mat (4, 41) is arranged between the collecting device (5) and the lower end face (23) of the first heat exchange module (2, 21), 21) and/or the rail (8) with the first filter mat (4, 41) is arranged on the collecting device (5) and/or on the lower end face (23) of the first heat exchange module (2, 21).

6. Heat exchange device according to one of the preceding claims, wherein the collecting device (5) is at least partially designed as a collecting plate (52), and the rail (8) with the first filter mat (4, 41) is arranged on the collecting device (5) and/or on the lower end face (23) of the first filter module (2, 21), 41) between the collecting plate (52) and the lower end face (23) of the first heat exchange module (2, 21) and/or the rail (8) with the first filter mat (4, 41) is arranged on the collecting plate (52) and/or on the lower end face (23) of the first heat exchange module (2, 21).

7. Heat exchange device according to one of the preceding claims, wherein the holder (71) with the first filter mat (4, 41) is arranged between the lower end face (23) of the first heat exchange module (2, 21) and the collecting device (5) and/or the holder (71) with the first filter mat (4) is arranged on the lower end face (23) of the first heat exchange module (2, 21) and/or on the collecting device (5), and the second filter mat (4, 42) is arranged on, preferably in, the rail (8), wherein the rail (8) is arranged between the lower end face (23) of the second heat exchange module (2, 22) and the collecting device (5) and/or the rail (8) with the second filter mat (4, 42) is arranged on the lower end face (23) of the second heat exchange module (2, 22) and/or on the collecting device (5).

8. Heat exchange device according to one of the preceding claims, wherein the first heat exchange module (2, 21) is arranged at an angle of inclination of 10 degrees a 170 degrees to the vertical direction (A) and/or the second heat exchange module (2, 22) is arranged at an angle of inclination of 10 degrees b 170 degrees to the vertical direction (A) and/or the first heat exchange module (2, 21) and the second heat exchange module (2, 22) are arranged in parallel.

9. Heat exchange device according to one of the preceding claims, wherein the rail (8) and/or the holder (71) of the cover (7) has a fastening element so that the first filter mat (4, 41) and/or the second filter mat (4, 42) can be fastened, in particular releasably fastened, to the rail (8) and/or to the holder (71) by means of the fastening elements.

10. Heat exchange device according to one of the preceding claims, wherein the first filter mat (4, 41) and/or the second filter mat (4, 42) is made of plastic, preferably of a polyurethane and/or a polyether, particularly preferably of a polyurethane foam and/or a polyether foam.

## Revendications

1. Un dispositif d'échange de chaleur (1) comprenant
- un premier module d'échange de chaleur (2, 21) pour l'échange de chaleur entre un fluide de transport et un réfrigérant, dans lequel le fluide de transport peut circuler autour du premier module d'échange de chaleur (2, 21) et le réfrigérant peut être guidé séparément du fluide de transport dans le premier module d'échange de chaleur (2) ;
- un dispositif de mouillage (3) qui est prévu et disposé de telle sorte que le premier module d'échange de chaleur (2, 21) peut être mouillé avec un liquide qui peut être évacué du dispositif de mouillage (3) ;
- une première natte filtrante (4, 41) qui est conçue et disposée sur le dispositif d'échange de chaleur (1) de telle sorte que le liquide s'écoulant du dispositif de mouillage (3) peut être recueilli avec la première natte filtrante (4, 41) et/ou qu'une particule entraînée par le liquide peut être séparée sur la première natte filtrante (4, 41) ;
- un dispositif collecteur (5) qui est disposé sur une face d'extrémité inférieure (23) du premier module d'échange de chaleur (2, 21) ; dans lequel la première natte filtrante (4, 41) est disposée entre le dispositif de mouillage (3) et le dispositif collecteur (5), et dans lequel la première natte filtrante (4, 41) est disposée entre le dispositif collecteur (5) et la face d'extrémité inférieure (23) du premier module d'échange de chaleur (2, 21) de sorte que le liquide passe à travers la première natte filtrante (4, 41) vers le dispositif collecteur (5),
**caractérisé en ce que**
- le dispositif d'échange de chaleur comprend un deuxième module d'échange de chaleur (2, 22), dans lequel le deuxième module d'échange de chaleur (2, 22) peut être mouillé avec le liquide qui peut être évacué du dispositif de mouillage (3) ;
- une deuxième natte filtrante (4, 42) est conçue et disposée sur le dispositif d'échange de chaleur (1) de telle sorte que le liquide s'écoulant du dispositif de mouillage (3) peut être recueilli avec la deuxième natte filtrante (4, 42) et/ou qu'une particule entraînée par le liquide peut être séparée sur la deuxième natte filtrante (4, 42) ; et dans lequel la deuxième natte filtrante (4, 42) est disposée sur une face d'extrémité inférieure (23) du deuxième module d'échange de chaleur (2, 22) ; et dans lequel
- le premier et/ou le deuxième module d'échange de chaleur (2, 21), (2, 22) consiste en un échangeur de chaleur laminé.

2. Un dispositif d'échange de chaleur selon la revendication 1, dans lequel un élément d'égouttage (6) est prévu sur la face d'extrémité inférieure (23) du premier module d'échange de chaleur (2, 21) et la première natte filtrante (4, 41) est disposée entre l'élément d'égouttage (6) et le dispositif collecteur (5) et/ou la première natte filtrante (4, 41) est disposée sur le dispositif collecteur (5) et/ou sur l'élément d'égouttage (6) de telle sorte que le liquide s'écoulant du dispositif de mouillage (3) peut être guidé vers la première natte filtrante (4, 41) avec l'élément d'égouttage (6).

3. Un dispositif d'échange de chaleur selon l'une des revendications 1 ou 2, dans lequel le dispositif d'échange de chaleur présente un couvercle (7) avec un support (71), et la première natte filtrante (4, 41) est disposée sur le support (71), de préférence dans le support (71).

4. Un dispositif d'échange de chaleur selon l'une des revendications précédentes, dans lequel le dispositif collecteur (5) est conçu au moins partiellement comme une cuve collectrice (51), et le couvercle (7) peut être disposé sur une ouverture de la cuve (53) de la cuve collectrice (51) de telle sorte que l'ouverture de la cuve (53) est au moins partiellement couverte par le couvercle (7), et le support (71) avec la première natte filtrante (4, 41) est disposé entre le dispositif collecteur (5) et la face d'extrémité inférieure (23) du premier module d'échange de chaleur (2, 21) et/ou le support (71) avec la première natte filtrante (4, 41) est disposé sur le dispositif collecteur (5) et/ou sur la face d'extrémité inférieure (23) du premier module d'échange de chaleur (2, 21).

5. Un dispositif d'échange de chaleur selon l'une des revendications précédentes, dans lequel la première natte filtrante (4, 41) est disposée sur un rail (8), de préférence dans un rail (8), et le rail (8) avec la première natte filtrante (4, 41) est disposé entre le dispositif collecteur (5) et la face d'extrémité inférieure (23) du premier module d'échange de chaleur (2, 21) et/ou le rail (8) avec la première natte filtrante (4, 41) est disposé sur le dispositif collecteur (5) et/ou sur la face d'extrémité inférieure (23) du premier module d'échange de chaleur (2, 21).

6. Un dispositif d'échange de chaleur selon l'une des revendications précédentes, dans lequel le dispositif collecteur (5) est au moins partiellement conçu comme une plaque collectrice (52), et le rail (8) avec la première natte filtrante (4, 41) est disposé entre la plaque collectrice (52) et la face d'extrémité inférieure (23) du premier module d'échange de chaleur (2, 21) et/ou le rail (8) avec la première natte filtrante (4, 41) est disposé sur la plaque collectrice (52) et/ou sur la face d'extrémité inférieure (23) du premier module d'échange de chaleur (2, 21).

7. Un dispositif d'échange de chaleur selon l'une des revendications précédentes, dans lequel le support (71) avec la première natte filtrante (4, 41) est disposé entre la face d'extrémité inférieure (23) du premier module d'échange de chaleur (2, 21) et le dispositif collecteur (5) et/ou le support (71) avec la première natte filtrante (4, 41) est disposé sur la face d'extrémité inférieure (23) du premier module d'échange de chaleur (2, 21) et/ou sur le dispositif collecteur (5), et la deuxième natte filtrante (4, 42) est disposée sur le rail (8), de préférence dans le rail (8), dans lequel le rail (8) est disposé entre la face d'extrémité inférieure (23) du deuxième module d'échange de chaleur (2, 22) et le dispositif collecteur (5) et/ou le rail (8) avec la deuxième natte filtrante (4, 42) est disposé sur la face d'extrémité inférieure (23) du deuxième module d'échange de chaleur (2, 22) et/ou sur le dispositif collecteur (5).

8. Un dispositif d'échange de chaleur selon l'une des revendications précédentes, dans lequel le premier module d'échange de chaleur (2, 21) est disposé avec un angle d'inclinaison de 10 degrés a 170 degrés par rapport à la direction verticale (A) et/ou le deuxième module d'échange de chaleur (2, 22) est disposé avec un angle d'inclinaison de 10 degrés b 170 degrés par rapport à la direction verticale (A) et/ou le premier module d'échange de chaleur (2, 21) et le deuxième module d'échange de chaleur (2, 22) sont disposés en parallèle.

9. Un dispositif d'échange de chaleur selon l'une des revendications précédentes, dans lequel le rail (8) et/ou le support (71) du couvercle (7) présente/présentent un élément de fixation, de sorte que la première natte filtrante (4, 41) et/ou la deuxième natte filtrante (4, 42) peut/peuvent être fixée/fixées, en particulier peut/peuvent être fixée/fixées de manière amovible, au rail (8) et/ou au support (71) au moyen des éléments de fixation.

10. Un dispositif d'échange de chaleur selon l'une des revendications précédentes, dans lequel la première natte filtrante (4, 41) et/ou la deuxième natte filtrante (4, 42) est en matière plastique, de préférence en polyuréthane et/ou en polyéther, en particulier de préférence en mousse de polyuréthane et/ou en mousse de polyéther.
